# EUROPEAN PATENT SPECIFICATION

(11) **EP 3 697 669 B1**
(45) Date of publication and mention of the grant of the patent: **19.07.2023**
(21) Application number: 18749350.7
(22) Date of filing: 31.07.2018
(51) Int. Cl.: B62B 1/12, E06C 1/397

(54) **MULTIPURPOSE TRANSPORT TROLLEY**
MEHRZWECKTRANSPORTWAGEN
CHARIOT DE TRANSPORT POLYVALENT

(30) Priority: 18.10.2017 SE 1751290
(43) Date of publication of application: 26.08.2020
(73) Proprietor: P Invent AB, 702 30 Örebro (SE)
(72) Inventor: EKBLOM, Per, 702 30 Örebro (SE)
(74) Representative: Bjerkén Hynell KB
(86) International application number: PCT/EP2018/070715
(87) International publication number: WO 2019/076504

(56) References cited:
- CN-Y- 2 696 948
- GB-A- 854 982
- US-A- 3 954 155
- US-A- 4 258 826
- US-B1- 7 051 837

## Description

### TECHNICAL FIELD

The invention relates to a means of transport, that is a multi-purpose transport trolley, for use among others at construction sites. The multi-purpose transport trolley has a frame unit, gripping members, wheels and fitting members to which function units for example boxes toolboxes, tools and frequently needed parts are detachably fitted.

### BACKGROUND OF THE INVENTION

Transportation means are known from prior art that have frame bodies essentially consisting of a number of connected bars structure with two wheels and a receiving plate at a lower part of it. The transportation means are typically used for carrying luggage.

However, there is a need to transport ladders, tools, tool boxes, and consumable parts to the construction site by means of a trolley. Arrived at the construction site the mentioned items are normally to be unloaded from the trolley and put on the floor. The working environment is normally dusty and dirty so that it could be desirable to avoid putting the items on the floor. One more aspect is to keep the items orderly together and not to have them scattered on the floor in the surrounding.

It is also a big help to keep the number of the needed items to a minimum in order not to transport many unnecessary things to the construction site.

A further desire is to keep all items orderly together at a stable parking position when arrived at the construction site.

There exist a large variety of transportation means/trolleys, but which present one or more disadvantages. US 70518367, DE202013002556 and TWM513815 disclose transportation means with the possibility of fitting boxes to them but being insufficiently practical and flexible. WO9209470 introduces a simple wheeled carrier for high loads. DE1225506 introduces a transportation means for carrying files and mailboxes. GB 2468135 is more or less limited to the use for gardening. GB 854982, US 20040200667, US2990764 and US20160257327 present designs, that do not serve a sufficient number of practical support functions.

In none of the mentioned prior art documents there is a hint about how to reduce the number of the items needed at a construction site and how to provide an orderly structure when used at the construction site.

### SUMMARY OF THE INVENTION

It is an object of the present invention to eliminate or at least minimize the above mentioned problems, which is achieved by a multi-purpose transport trolley, for use among others at construction sites, as defined in claim 1.

According to a substantial aspect of the invention, the multi-purpose transport trolley has a frame unit, gripping members, wheels and preferably also fitting members, to which function units for example boxes toolboxes, tools and frequently needed parts are detachably fitted; whereby the said frame unit comprises a front and a rear frame part that are joined by a pivot device, arranged to enable the frame parts to be either in a close together position or in a folded-out position. Furthermore, the frame parts may form a ladder in the folded-out position, by means of having at least one step attached on one of the frame parts, and wherein attached function units may be kept substantially horizontal in the close together position and in the folded-out position, when placed on a horizontal plane.

Thanks to the invention the transport means has a multi-function character that makes the taking ladder and workbench into the construction site in some extent superfluous and the design becomes a very compact and simple one.

According to another aspect of the invention, the multi-purpose transport trolley in folded-out position is secured by a securing device to provide a stable footstool or ladder. In many cases it will be a good substitution for a normal ladder.

According to another aspect of the invention, more stability is achieved with the multi-purpose transport trolley in that the wheels are out of contact with the floor in the folded-out position so that no rolling can happen. The trolley is in a stable contact to the floor via the lower ends of the front and the rear frame parts.

Furthermore, the footstool or ladder of the trolley may have one or more steps being supported by the front and the back-frame members. The wheels may be connected to the rear frame part by means of wheel support devices.

According to another aspect of the invention, fitting members are arranged at the front frame portion to provide anchoring for the boxes and tools to be attached to the trolley. The Fitting members are protruded transversally through the front frame portion. The mentioned boxes that are here referred to as releasable function units are fit with attachment members comprising hooks arranged to interact with the said fitting members so that the boxes can be assembled to the trolley detachably and removed again easily.

According to a further aspect of the invention, the front frame portion and the related fitting members form a storage module on which the boxes can be attached.

The multi-purpose transport trolley of the invention is a carrier which gives space for keeping together orderly and clearly tools and integrates a ladder in itself and provides a stable folded-out position.

### Brief Description of the Figures

In the following the invention will be described in more detail with reference to the accompanying drawings, in which:
- Fig. 1: shows a perspective front view of the multi-purpose transport trolley in folded condition,
- Fig. 2: shows a perspective front view of the multi-purpose transport trolley in folded-out position,
- Fig. 3: shows a perspective front view of the multi-purpose transport trolley in folded condition with releasable function units,
- Fig. 4: shows a perspective front view of the multi-purpose transport trolley in folded-out position with releasable function units,

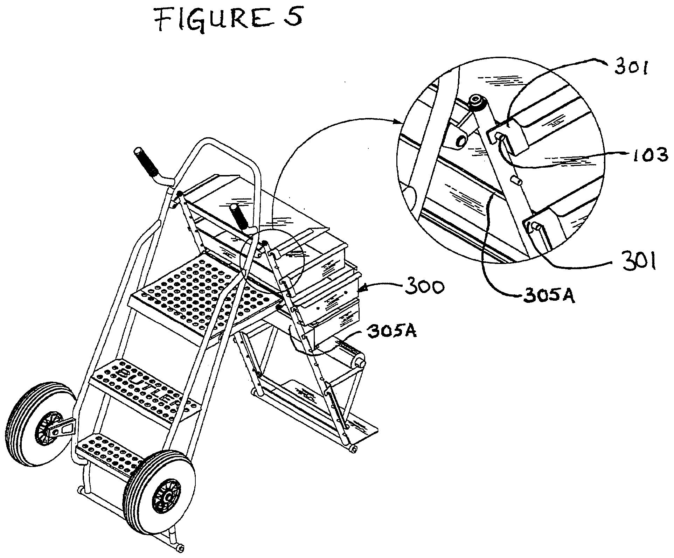

- Fig. 5: shows a perspective rear view of the multi-purpose transport trolley in folded-out position with an enlargement of the releasable function units having attachment members comprising hooks being engaged in to the fitting members of the front frame portion,
- Fig. 6: shows a perspective front view of the multi-purpose transport trolley in folded-out position with an enlargement of the upper step being secured between the front frame portion and the rear frame portion,
- Fig. 7: shows a perspective front view of a releasable function unit that is a box,
- Fig. 8: shows a perspective front view of a releasable function unit that is a drag box,
- Fig. 9: shows a perspective front view of a releasable function unit that is a turn box,
- Fig. 10: shows a perspective front view of a releasable function unit that is an open box,
- Fig. 11: shows a perspective front view of a carrying function unit,
- Fig. 12: shows a perspective front view of the carrying functional unit with vertically positioned boxes, and,
- Fig. 13: shows a perspective front view of a of storage modules.

### DETAILED DESCRIPTION OF THE FIGURE

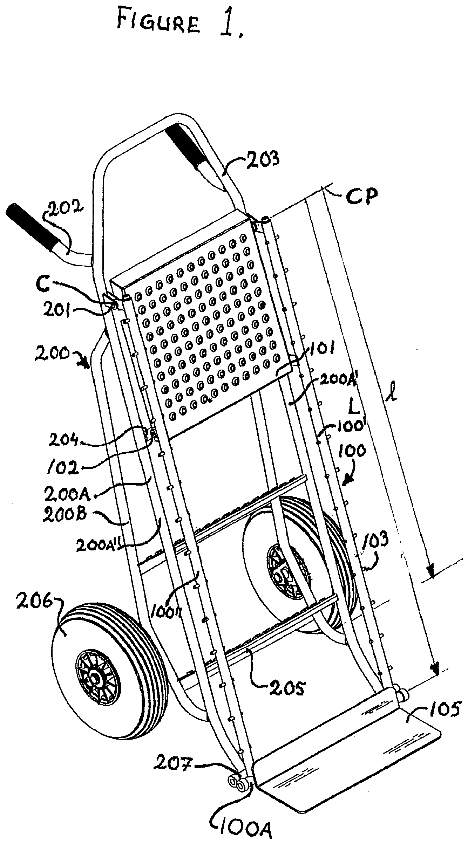

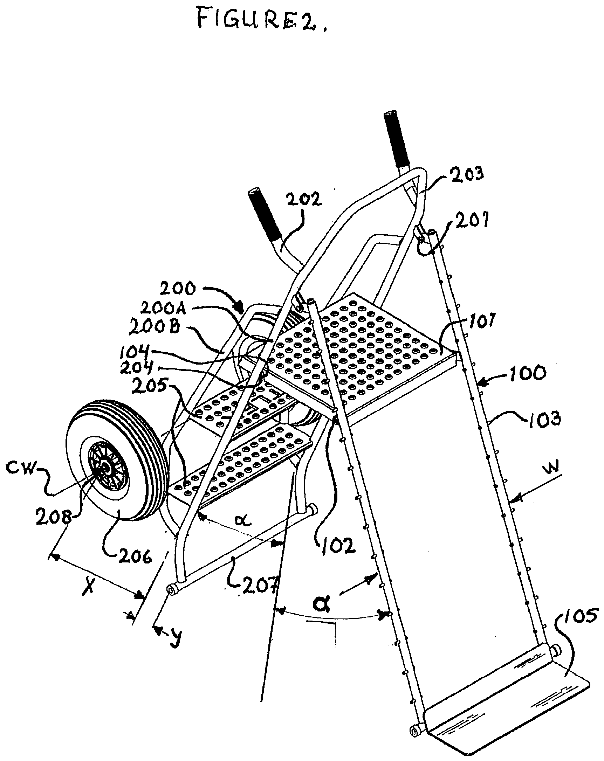

Figures 1, 2 show the multi-purpose trolley of the invention. The main structural members of the trolley are a front frame part 100 and a rear frame part 200 that are connected to each other pivotally by means of a pivot device 201 at a pivoting axis CP.

The front frame part 100 is formed as a U formed part and comprises two shanks 100', 100" and a lower end 100A. The shanks 100', 100" and the lower end 100A are tubes that are connected to each other in an appropriate manner, e.g. by welding, rivets or screws. The front frame part 100 can be produced also from a single tube by bending it into the shanks and the lower end. A load plate 105 is connected to the lower end 100A of the front frame part 100.

The rear frame part 200 comprises a front frame member 200A and a back-frame member 200B. The front frame member 200A of the rear frame part 200 has an essentially rectangular form and comprises two shanks 200', 200", a lower end 207 and an upper member 203. The shanks 200', 200", the lower end 207 and the upper member 203 are tubes that are appropriately connected to each other or maybe produced also from a single tube by bending. At least one gripping member 202, 203 is provided at the upper portion of the front frame member 200A. The upper member 203 may provide a possible gripping device and also has handles attached to there.

The back-frame member 200B of the rear frame part 200 can be formed as a curvature or a broad U bended tube with short shanks and a main connection member in order to connect the two shanks. Instead of bending the shanks and the main connection member can also be joined to each other e.g. by welding, rivets or screws.

At least one back-frame member 200B is connected to the front frame member 200A to form the rear frame part 200. The connection is done e.g. by welding, rivets or screws. The back-frame member 200B is shorter than the front frame member 200A.

The lowest part of the back-frame member 200B is connected to the front frame member 200A at an upper position with regard to the lower end of the front frame member 200A. One or more steps can connect the front frame member 200A and back-frame member 200B. The mentioned step strengthens the structure of the rear frame part 200 and as later will be described the steps can serve as a part of o ladder.

Wheels 206 are fitted to the rear frame part 200 by means of wheel support devices 208 that are connected to a lower part of the back-frame member 200B. The above-mentioned pivot device 201 that connects the front frame part 100 to the rear frame part 200 is pivotally realized by screws of rivets. There is at least one securing device 101 provided that can connect the frame parts 100 and 200 to each other when in a fold-out position.

For a better understanding the portion in contact with the floor or near to it is called lower portion or lower end and the portion far away from the floor is called upper portion.

According to a preferred embodiment of the invention the multi-purpose transport trolley comprises a front frame part 100 and a rear frame part 200 that are pivotally connected to each other by means of pivot device 201 connecting the frame parts 100, 200 at the upper portion of the front frame part 100 and at a position below, but nearby the gripping part 202,203 of the rear frame part 200.

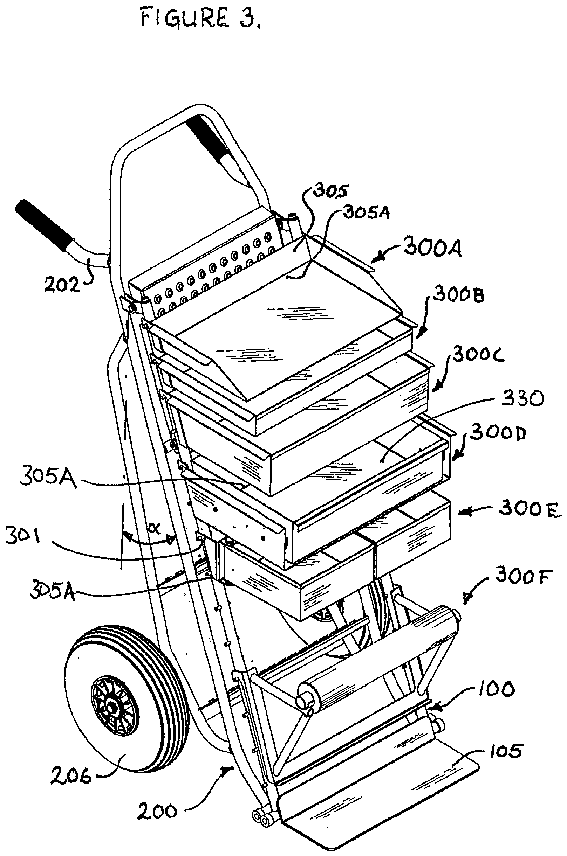

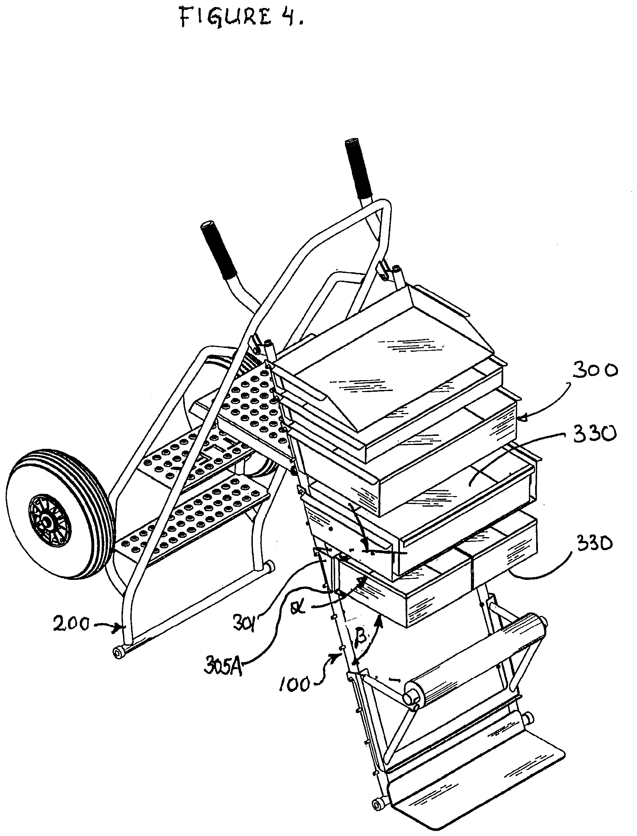

During movement of/transportation with the trolley the frame parts 100, 200 are folded together and the trolley is tilted so that the front frame part 100 lays on the rear frame part 200. In a folded-out position the lower ends 100A, 207 of the frame parts 100, 200 are pulled apart so that the securing device 101 that is pivotally connected to the front frame part 100 by means of the pivoting device 102, is engaged with its securing device 104 to the corresponding securing device 204 of the rear frame part 200. In the folded-out position each frame parts is positioned to form a substantially equal sharp angle α in relation to the vertical, which preferably is in the range of 15-25°. As can be noted (see fig 3) the angle α is substantially the same for the front frame part 100 also in folded together mode, which brings about the advantage that function units 300 may be substantially horizontally positioned in both the folded together mode as in the folded-out mode, by means of arranging the attachment members 301 and support members 305A forming substantially the same angle α, between a transverse plane to the front frame part 100 and the support plane of a function unit 300 (see Figs. 3 and 4). Accordingly, the angle β between the plane of the front frame part 100 and a supporting bottom 330 of a function unit 300 will be 90°-α (see Fig. 4).

When doing this rearranging; it is, when changing the position of the trolley from tilted to folded-out conditioned by the meaningful topology of the frame parts 100, 200, the wheels 206 are put in a position where they stay away from the floor. The trolley stands on the lower ends 100A, 207 of the frame parts 100, 200. The lower ends 100A, 207 can have rubber stoppers for a better friction with the ground and for a better stability. The securing device 101 is formed as a step so that together with the steps 205 one can use the trolley as a ladder or a footstool.

The topology of the rear frame part 200 is given by means of having the lower end 207 positioned at longer distance L from the pivot axis CP than the distance l between the lower ends of the wheels 206 and the pivot axis CP, such that the wheels 206 are positioned above the floor when the frame parts 100, 200 are pivoted apart.

A further beneficial design aspect in this regard is that the wheel axis CW is positioned in a plane parallel to the plane of the shanks 200', 200" at a distance X at a gripping side of the trolley, whereby the distance X is larger than the radius of the wheels 206. The lower end 207 is positioned in a parallel plane that is positioned at a distance Y in the other direction of the said shanks plane. Preferably the distance Y is smaller than distance X. The distance Y is also beneficial to keep a desired distance between the frame parts 100 and 200.

According to a preferred embodiment of the invention (Figs. 1, 2) fitting members 103 are arranged at different locations along a mid-portion of the front frame part 100 to protrude transversally, outwardly at the outside of the front frame parts 100', 100". For this embodiment, function units 300 are provided (Fig. 3) that can be different sized open boxes 300A, 300B, 300C, a drawer 300D, turn boxes 300E and/or a roller part 300F. Each function unit 300 preferably has an attachment member 301 comprising a hook 301A being arranged to be engaged with the fitting members 103 of the front frame part 100 and hence hanging on it. A transversal member 305A will interact to keep the function unit substantially horizontally by leaning onto the upper surface of the shanks 100', 100".

In the preferred embodiment at least one function unit 300 is box shaped having a rear wall 305 that is equally wide as the width W between the outer sides of front frame parts 100', 100", whereby a corner 305A is formed between the back wall 205 and the bottom 330 may form the transversal supporting lower member of the box. Further the attachment members 301 preferably are in the form of plates each having a recess 301B forming the hook 301A and attached at the function unit 300 (preferably directly onto side wall 331 of a function unit 300) at a distance equal to or slightly larger than W, thereby safeguarding good fit onto the fitting members 103, and also securing a function unit 300 sideways.

The upper box 300A can be for example a storage surface. Furthermore, also the securing device 101 may provide a storage surface.

The open boxes 300A, 300B, 300C, the drawer 300D and the turn boxes 300E are shown as examples as function units 300 that can be used as storage spaces for tools and parts that may be needed at a construction site.

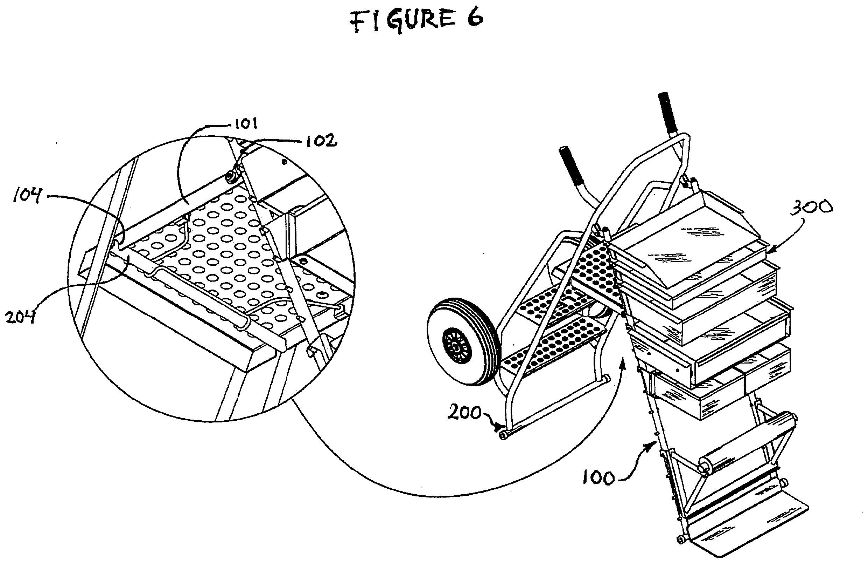

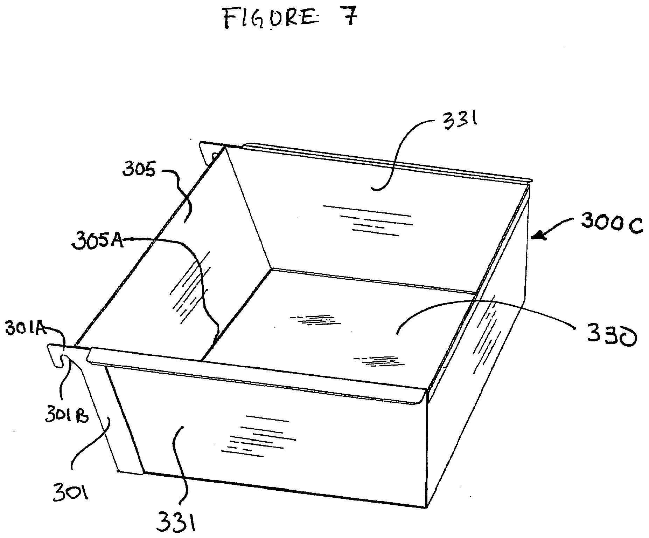

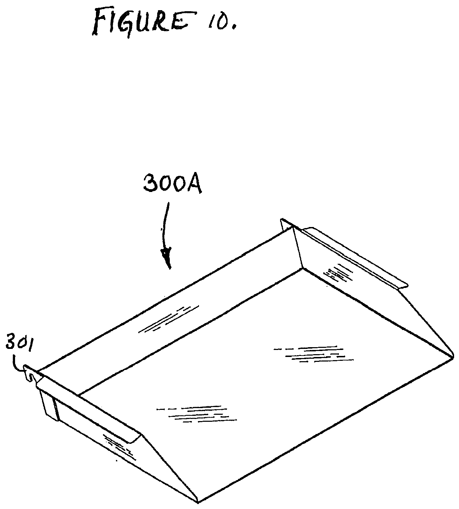

According to a further embodiment of the invention, an open box function unit 300A, 300B, 300C is a box that has a frame and at least three walls and a bottom surface (Figs. 6, 7, 10). At the rear part of the box frame there are arranged attachment members comprising hooks 301A to be engaged onto the fitting members 103, and preferably the transversal member 305A forms a lower corner part of the rear wall 305.

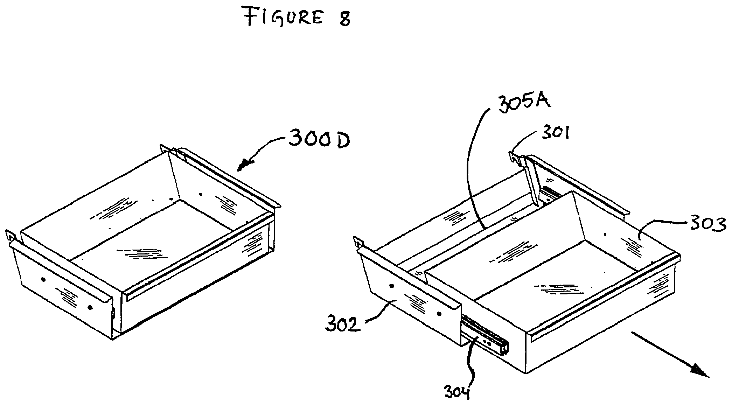

According to a further embodiment of the invention, a drawer function unit 300D is a box that has an outer casing 302 and an inner casing 303 being slid ably connected by means of a sliding bracket 304 (Figs. 6, 8); which at the rear part of the outer casing 302 is arranged with attachment members 301 comprising hooks 301A to be engaged onto the fitting members 103.

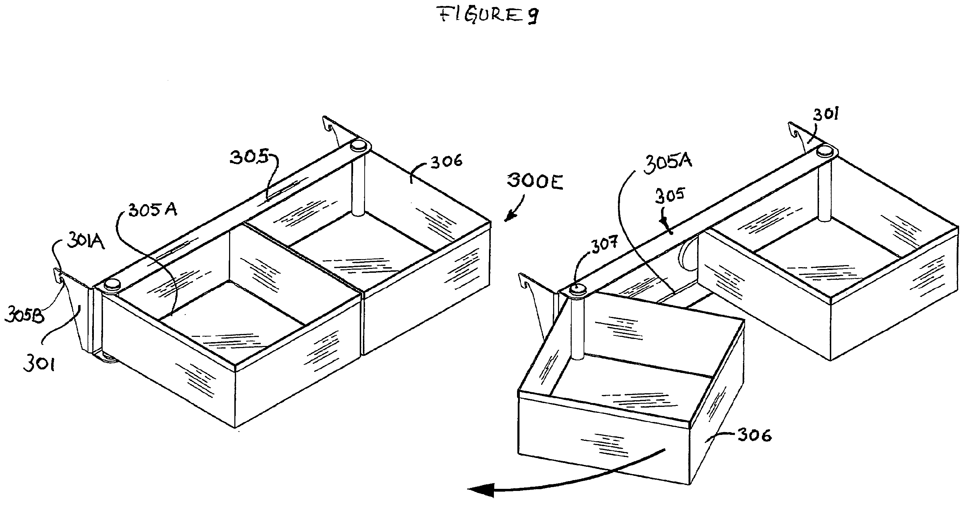

According to a further embodiment of the invention, turn box 300E may have a rear wall 305 supplemented with hinges 307 vertically arranged at the ends of the rear wall 305 and turn boxes 306 being connected pivotally to the rear wall 305 (Figs. 6, 9). At the rear part of the rear wall 305 the attachment members 301 comprising hooks 301A is to be engaged onto the fitting members 103.

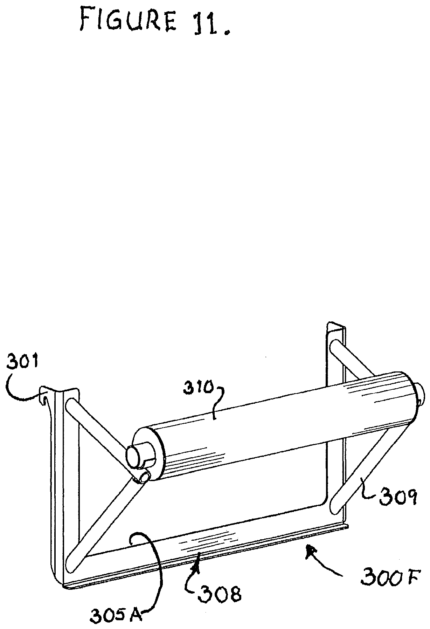

According to a further embodiment of the invention, the roller part function unit 300F (Fig. 11) comprises a U-shaped support frame 308, a bracket 309 and a shaft device 310. The support frame 308 includes the transversal member 305A and the bracket 309 that keeps the shaft device 310 at a distance from the transversal member 305A. The shaft device 310 can be used as material supply roll to dispense cable, tissue, and paper and like during the work at the construction side.

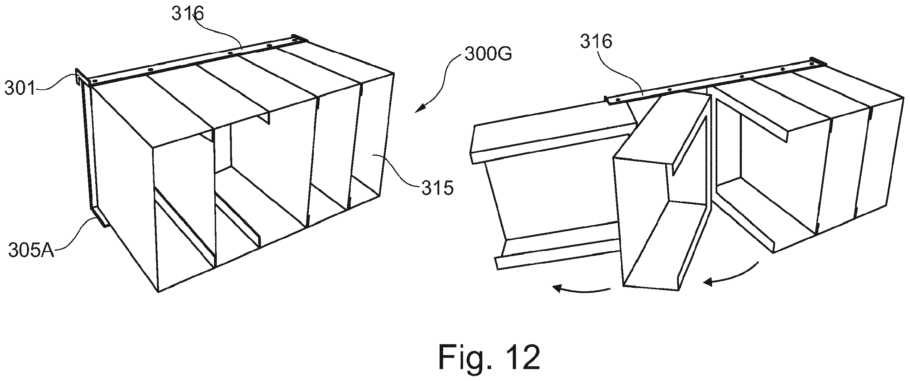

According to a further embodiment of the invention, the carry function unit 300G (Fig. 12) comprises frame attachment members 301 comprising hooks 301A suitable to be engaged onto the fitting members 103 and a plurality of vertically extending box members 315 pivotally arranged engaged in a frame 316 for storage of consumables at the construction site.

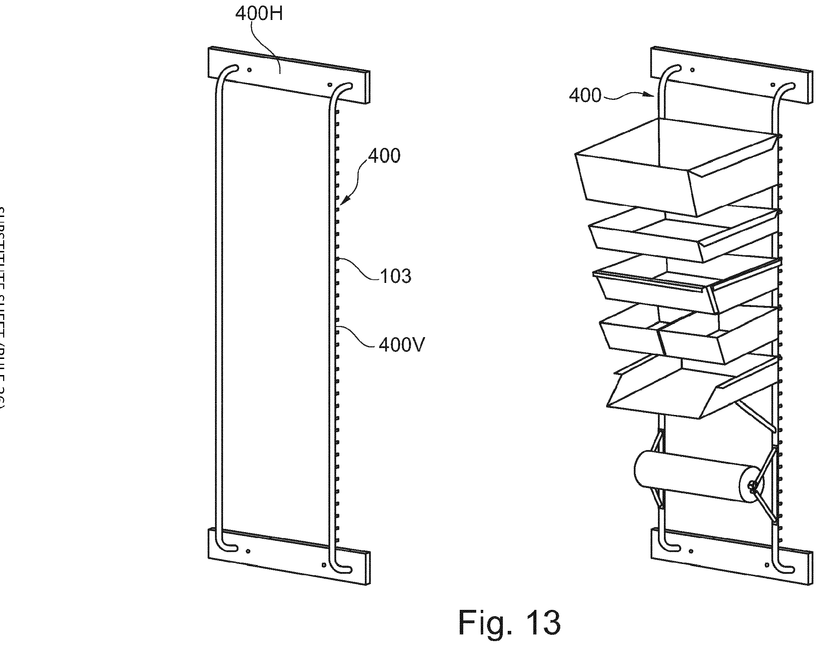

According to a further embodiment of the invention, a storage module 400 is provided for storage of the function units 300 (Fig. 13), when not in use on the trolley. The storage module 400 has basically a similar design as the front frame part 100 described in the previous embodiments. A difference is that the storage module 400 is a standalone module and can be positioned at different places, e.g. in a service car.

According to an embodiment of the invention, the storage module 400 comprises fitting members 103 that are arranged at different locations along the vertical portions 400V of the frame 400V, 400H to protrude transversally, outwardly at the outside of the frame. The frame also comprises horizontal members 400H for attachment of the module 400 to a wall.

According to another embodiment of the invention, the rear part of the storage module 400 may be arranged with attachment members 301 comprising hooks 301A enabling it to be engaged onto the fitting members 103 of the front frame part 100.

According to another embodiment of the invention, the front frame part 100 may have at least one receiving device to be engaged with the vertical portions 400V and/or horizontal members 400H of the storage module 400. In this case no hooks 301A are needed.

An advantage of the storage module 400 is that it can be equipped with the function units 300 outside of the construction site for example at the workshop or in the service car, i.e. resulting in better order and flexibility.

The material of the frames 100, 200, the steps 205 and the storage module 400 can be a large variety, e.g. of metal for example steel or aluminum or it can be plastic as composite material.

It is foreseen that separate application/s, e.g. as divisional application/s, may be filed to separately protect separate features of the one or more function units.

### DESCRIPTION OF NUMERALS

- 100: front frame part
- 100': shank
- 100": shank
- 101: securing device
- 102: pivot device for securing device
- 103: fitting member
- 104: securing device
- 105: load plate
- 100A: lower end
- 200: rear frame part
- 200A: front frame member
- 200B: back-frame member
- 201: pivot device
- 202: gripping member
- 203: gripping member
- 204: securing device
- 205: step
- 206: wheel
- 207: lower end
- 208: wheel support device
- 300: function unit
- 300A: open box
- 300B: open box
- 300C: open box
- 300D: drawer
- 300E: turn boxes
- 300F: roller part
- 300G: carry function unit
- 301: attachment members
- 301A: hooks
- 301B: recess
- 302: outer casing
- 303: inner casing
- 304: sliding bracket
- 305: rear wall
- 305A: transversal support member
- 306: turn box
- 307: hinge for turn box
- 308: U-shaped support frame
- 309: bracket
- 310: shaft device
- 315: vertically extending box members
- 330: Bottom
- 331: Side walls
- 400: storage module
- 400F: frame of storage module
- 400H: horizontal member of storage module
- 400V: vertical portion of storage module
- CP: pivoting axis
- CW: wheel axis
- l: short distance
- L: larger distance
- X: wheel axis distance
- W: frame width
- Y: lower end distance

## Claims

1. A multi-purpose transport trolley, comprising frame parts (100, 200) having wheels (206) attached to the frame parts (100, 200) at a lower end, gripping members (202, 203) at an upper end and a plurality of fitting members (103) at different locations along a mid-portion of the frame part (100, 200), which fitting members (103) are arranged to releasably carry function units (300), wherein said frame parts (100, 200) comprise a front frame part (100) and a rear frame part (200) which at the top are joined by a pivot device (201) having a pivoting axis (CP) arranged to enable the frame parts (100, 200) to be either in a close together positioned or in a folded-out position, wherein a lower end (100A) of said front frame part (100) acts as a first support in the folded-out position and a lower end (207) of the rear frame part (200) that supports said wheels (206) acts as a second support in the folded-out position when positioned on a horizontal plane, and wherein the frame parts (100, 200) form a ladder in the folded-out position, by means of having at least one step (205) attached on one of the frame parts (100, 200), wherein said lower end (207) of the rear frame part (200) is positioned at a larger distance (L) away from the pivoting axis (CP) of the pivoting device (201) than the distance (l) between the pivoting axis (CP) and the most distant wheel part, **characterized in that** wherein each frame part (100, 200) of the trolley in a folded-out position is positioned to form a substantially equal acute angle (α) in relation to the vertical when placed on a horizontal plane and wherein said acute angle (α) is substantially the same in relation to the vertical for the front frame part (100) also in folded together mode when supported by said wheels (206) and said lower end (207) of the rear frame (200), when placed on a horizontal.

2. A multi-purpose transport trolley according to claim 1, **characterized in that** said fitting members (103) are arranged at the front frame part (100) and that said function units (300) are substantially horizontally positioned in both the folded together mode as in the folded-out mode, by means of arranging attachment members (301) comprising hooks (301A) and support members (305A) of said function units (300) forming substantially said same angle (α), in relation to said front frame part (100).

3. A multi-purpose transport trolley according to claim 2, **characterized in that** said folded-out position is secured by a securing device (101, 104, 204) including a pivotal member (101) that forms a further step in a secured folded-out position of the trolley.

4. A multi-purpose transport trolley according to any of claims 1-3, **characterized in that**, said wheels (206) are out of contact with the floor in the folded-out position.

5. A multi-purpose transport trolley according to claim 4, **characterized in that** said angle (α) is in the range of 15-25°.

6. A multi-purpose transport trolley according to claim 4 or 5, **characterized in that**, the rear frame part (200) supporting said wheels (206) comprises at least one step (205) supported by a front frame member (200A) and a back frame member (200B) of said frame part (200).

7. A multi-purpose transport trolley according to claim 6, **characterized in that**, said back frame member (200B) is arranged to support said wheels (206).

8. A multi-purpose transport trolley according to claim 7, **characterized in that** said back frame member (200B) is arranged to support said wheels (206) by means of a wheel support device (208).

9. A multi-purpose transport trolley system according to claim 2, **characterized in that**, said fitting members (103) are provided in the form of stub shaft members protruding transversally, outwardly at the outside of the front frame portion (100).

10. A multi-purpose transport trolley system according to claim 9, arranged with a plurality of fitting members (103) at different locations along a mid-portion of said front frame part (100), and with a plurality of releasably attached function units (300), wherein each releasable function unit (300) is arranged with a transversal support member (305A) at a lower level than said attachment members (301) comprising hooks (301A), which transversal support member (305A) interacts with the front side of the front frame portion (100).

11. A multi-purpose transport trolley system according to claim 8, 9 or 10 further comprising a storage module (400) arranged with corresponding fittings (103) as said multi-purpose transport trolley, for function units (300).

## Patentansprüche

1. Mehrzweck-Transportwagen, umfassend Rahmenteile (100, 200) mit Rädern (206), die an einem unteren Ende an den Rahmenteilen (100, 200) angebracht sind, Greifelemente (202, 203) an einem oberen Ende und mehrere Anschlussstückelemente (103) an unterschiedlichen Stellen entlang eines Mittelabschnitts des Rahmenteils (100, 200), wobei die Anschlussstückelemente (103) so angeordnet sind, dass sie Funktionseinheiten (300) lösbar tragen, wobei die Rahmenteile (100, 200) einen vorderen Rahmenteil (100) und einen hinteren Rahmenteil (200) umfassen, die oben durch eine Schwenkvorrichtung (201) mit einer Schwenkachse (CP) verbunden sind, die so angeordnet ist, dass die Rahmenteile (100, 200) entweder in einer eng aneinander liegenden Position oder in einer ausgeklappten Position sein können, wobei ein unteres Ende (100A) des vorderen Rahmenteils (100) als ein erster Träger in der ausgeklappten Position wirkt und ein unteres Ende (207) des hinteren Rahmenteils (200), das die Räder (206) trägt, als ein zweiter Träger in der ausgeklappten Position wirkt, wenn es in einer horizontalen Ebene positioniert ist, und wobei die Rahmenteile (100, 200) in der ausgeklappten Position eine Leiter bilden, indem mindestens eine Stufe (205) an einem der Rahmenteile (100, 200) angebracht ist, wobei das untere Ende (207) des hinteren Rahmenteils (200) in einem größeren Abstand (L) von der Schwenkachse (CP) der Schwenkvorrichtung (201) angeordnet ist als der Abstand (1) zwischen der Schwenkachse (CP) und dem am weitesten entfernten Radteil, **dadurch gekennzeichnet, dass** jedes Rahmenteil (100, 200) des Wagens in einer ausgeklappten Position so positioniert ist, dass er einen im Wesentlichen gleichen spitzen Winkel (α) in Bezug auf die Vertikale bildet, wenn er auf einer horizontalen Ebene platziert ist, und wobei der spitze Winkel (α) im Wesentlichen der gleiche in Bezug auf die Vertikale für den vorderen Rahmenteil (100) auch im zusammengeklappten Modus ist, wenn er durch die Räder (206) und das untere Ende (207) des hinteren Rahmens (200) getragen ist, wenn er auf eine Horizontale platziert ist.

2. Mehrzweck-Transportwagen nach Anspruch 1, **dadurch gekennzeichnet, dass** die Anschlussstückelemente (103) an dem vorderen Rahmenteil (100) angeordnet sind und dass die Funktionseinheiten (300) sowohl in dem zusammengeklappten Modus als auch in dem ausgeklappten Modus im Wesentlichen horizontal positioniert sind, indem Anbringungselemente (301), die Haken (301A) umfassen, und Tragelemente (305A) der Funktionseinheiten (300), die im Wesentlichen den gleichen Winkel (α) bilden, in Bezug auf das vordere Rahmenteil (100) angeordnet sind.

3. Mehrzweck-Transportwagen nach Anspruch 2, **dadurch gekennzeichnet, dass** die ausgeklappte Position durch eine Sicherungsvorrichtung (101, 104, 204) gesichert ist, die ein schwenkbares Element (101) aufweist, das eine weitere Stufe in einer gesicherten ausgeklappten Position des Wagens bildet.

4. Mehrzweck-Transportwagen nach einem der Ansprüche 1-3, **dadurch gekennzeichnet, dass** die Räder (206) in der ausgeklappten Position keinen Kontakt mit dem Boden haben.

5. Mehrzweck-Transportwagen nach Anspruch 4, **dadurch gekennzeichnet, dass** der Winkel (α) in dem Bereich von 15-25° liegt.

6. Mehrzweck-Transportwagen nach Anspruch 4 oder 5, **dadurch gekennzeichnet, dass** der hintere Rahmenteil (200), der die Räder (206) trägt, mindestens eine Stufe (205) umfasst, die von einem vorderen Rahmenelement (200A) und einem hinteren Rahmenelement (200B) des Rahmenteils (200) getragen ist.

7. Mehrzweck-Transportwagen nach Anspruch 6, **dadurch gekennzeichnet, dass** das hintere Rahmenelement (200B) so angeordnet ist, dass es die Räder (206) trägt.

8. Mehrzweck-Transportwagen nach Anspruch 7, **dadurch gekennzeichnet, dass** das hintere Rahmenelement (200B) so angeordnet ist, dass es die Räder (206) mittels einer Räder-Tragvorrichtung (208) trägt.

9. System eines Mehrzweck-Transportwagens nach Anspruch 2, **dadurch gekennzeichnet, dass** die Anschlussstückelemente (103) in Form von Schaftstumpfelementen vorgesehen sind, die an der Außenseite des vorderen Rahmenabschnitts (100) quer nach außen vorstehen.

10. System eines Mehrzweck-Transportwagens nach Anspruch 9, das mit mehreren Anschlussstückelementen (103) an unterschiedlichen Stellen entlang eines Mittelabschnitts des vorderen Rahmenteils (100) und mit mehreren lösbar angebrachten Funktionseinheiten (300) angeordnet ist, wobei jede lösbare Funktionseinheit (300) mit einem querverlaufenden Tragelement (305A) auf einer niedrigeren Höhe als die Anbringungselemente (301), die Haken (301A) umfassen, angeordnet ist, wobei das querverlaufende Tragelement (305A) mit der Vorderseite des vorderen Rahmenabschnitts (100) zusammenwirkt.

11. System eines Mehrzweck-Transportwagens nach Anspruch 8, 9 oder 10, ferner umfassend ein Lagermodul (400), das mit entsprechenden Anschlussstücken (103) wie der Mehrzweck-Transportwagen für Funktionseinheiten (300) angeordnet ist.

## Revendications

1. Chariot de transport polyvalent, comprenant des parties (100, 200) de châssis ayant des roues (206) fixées aux parties (100, 200) de châssis à une extrémité inférieure, des éléments (202, 203) de préhension à une extrémité supérieure et une pluralité d'éléments (103) de montage en des emplacements différents le long d'une partie médiane de la partie (100, 200) de châssis, lesquels éléments (103) de montage sont agencés pour porter, de manière amovible, des unités (300) fonctionnelles, dans lequel lesdites parties (100, 200) de châssis comprennent une partie (100) avant de châssis et une partie (200) arrière de châssis, qui sont réunies au sommet par un dispositif (201) à pivot ayant un axe (CP) de pivotement disposé de manière à permettre aux parties (100, 200) de châssis d'être soit dans une position ensemble proche soit dans une position dépliée, dans lequel une unité (100A) inférieure de ladite partie (100) avant de châssis sert de premier support dans la position dépliée et une extrémité (207) inférieure de la partie (200) arrière de châssis, qui supporte lesdites roues (206), sert de deuxième support dans la position dépliée, lorsque positionnée sur un plan horizontal, et dans lequel les parties (100, 200) de châssis forment une échelle, dans la position dépliée, par le fait d'avoir au moins un échelon (205) fixé à l'une des parties (100, 200) de châssis, dans lequel l'extrémité (207) inférieure de la partie (200) arrière du châssis est plus éloigné, d'une distance (L), de l'axe (CP) de pivotement du dispositif (201) pivotant que la distance (1) entre l'axe (CP) pivotant et la partie la plus distante de la roue, **caractérisé en ce que** chaque partie (100, 200) de châssis du chariot, dans une position dépliée, est positionnée pour faire un angle (α) aigu sensiblement égal avec la verticale lorsque placée sur un plan horizontal et dans lequel ledit angle (α) aigu est sensiblement le même par rapport à la verticale pour la partie (100) avant du châssis également dans le mode plié ensemble lorsque supporté par lesdites roues (206) et ladite extrémité (207) inférieure du châssis (200) arrière, lorsque placée sur une horizontale.

2. Chariot de transport polyvalent suivant la revendication 1, **caractérisé en ce que** lesdits éléments (103) de montage sont montés à la partie (100) avant du châssis, et **en ce que** lesdites unités (300) fonctionnelles sont positionnées sensiblement horizontalement, à la fois dans le mode plié ensemble et dans le mode déplié, par le fait de monter des éléments (301) de fixation comprenant des crochets (301A) et des éléments (305A) de support desdites unités (300) fonctionnelles faisant sensiblement ledit même angle (α), par rapport à ladite partie (100) avant de châssis.

3. Chariot de transport polyvalent suivant la revendication 2, **caractérisé en ce que** ladite position dépliée est fixée par un dispositif (101, 104, 204) de fixation comprenant un élément (101) pivotant, qui forme un autre échelon dans la position dépliée fixée du chariot.

4. Chariot de transport polyvalent suivant l'une quelconque des revendications 1 à 3, **caractérisé en ce que** lesdites roues (206) sont hors de contact avec le sol dans la position dépliée.

5. Chariot de transport polyvalent suivant la revendication 4, **caractérisé en ce que** ledit angle (α) est dans la plage de 15 à 25°.

6. Chariot de transport polyvalent suivant la revendication 4 ou 5, **caractérisé en ce que** la partie (200) arrière du châssis supportant lesdites roues (206) comprend au moins un échelon (205) supporté par l'élément (200A) avant du châssis et un élément (200B) arrière du châssis de ladite partie (200) du châssis.

7. Chariot de transport polyvalent suivant la revendication 6, **caractérisé en ce que** ledit élément (200B) arrière du châssis est disposé pour supporter lesdites roues (206).

8. Chariot de transport polyvalent suivant la revendication 7, **caractérisé en ce que** ledit élément (200B) arrière du châssis est disposé pour supporter lesdites roues (206) au moyen d'un dispositif (208) de support de roue.

9. Système de chariot de transport polyvalent suivant la revendication 2, **caractérisé en ce que** lesdits éléments (103) de montage sont prévus sous la forme d'éléments de bout d'arbre faisant saillie transversalement en allant vers l'extérieur de la partie (100) avant du châssis.

10. Système de chariot de transport polyvalent suivant la revendication 9, agencé en ayant une pluralité d'éléments (103) de montage en des emplacements différents le long d'une partie médiane de ladite partie (100) avant du châssis, et en ayant une pluralité d'unités (300) fonctionnelles fixées de manière amovible, dans lequel chaque unité (300) fonctionnelle amovible est disposée en ayant un élément (305A) transversal de support à un niveau plus bas que lesdits éléments (301) de fixation comprenant des crochets (301A), lequel élément (305A) transversal de support interagit avec le côté avant de la partie (100) avant du châssis.

11. Système de chariot de transport polyvalent suivant la revendication 8, 9 ou 10, comprenant en outre un module (400) de stockage agencé en ayant des raccords (103) correspondants comme ledit chariot de transport polyvalent, pour des unités (300) fonctionnelles.
